# EUROPEAN PATENT APPLICATION

(11) **EP 4 497 734 A1**
(43) Date of publication of application: **29.01.2025**
(21) Application number: 23188327.3
(22) Date of filing: 28.07.2023
(51) Int. Cl.: C04B 20/04

(54) **CALCINATION OF CLAY**

(71) Applicant: amaTEQ Holding GmbH, 48143 Münster (DE)
(72) Inventor: Kehrmann, Alexander, 48143 Münster (DE)
(74) Representative: Hoffmann Eitle

(57) **Abstract**

The present invention is directed to a process for treating clay or a composition comprising clay, preferably materials that exhibit hydraulic properties after thermal treatment, which process and treated materials improve the CO₂ footprint if used as substitute for cement. A unit employed in the process comprises an indirect-fired rotary thermal reactor.

## Description

### Field of the Invention

The present invention relates to a unit and/or process for treating clay or a composition comprising clay, preferably materials that exhibit hydraulic properties after thermal treatment, which process and treated materials improve the CO₂ footprint if the material is used as substitute for cement or as a supplemental raw material for cement production. The unit and/or process rely on the use of an indirect-fired rotary thermal reactor.

### Background of the Invention

Manufacturing cement results in high CO₂ emissions. Most of these CO₂ emissions are inevitable due to the nature of the chemical compounds involved. Therefore, alternative materials with a lower CO₂ footprint find increasing attention, e.g. calcined clay.

Clay can be used as a substitute for cement in certain applications, although it is not as commonly used or as structurally strong as cement.

To improve the properties of clay and make it suitable as a substitute for cement in certain applications, various treatments and techniques can be employed.

Stabilization with Lime: Lime stabilization involves adding lime (calcium oxide or calcium hydroxide) to the clay to improve its engineering properties.

Stabilization with Cement is another option: cement is mixed with clay to improve its properties.

Calcination of clay at high temperatures can be used to remove water, organic matter, and chemically bound elements. This process transforms clay into a material with improved properties.

Traditional kiln firing is a widely used method for clay calcination. In this process, clay is shaped into desired forms, such as bricks or tiles, and then fired in a kiln. The kiln is heated to high temperatures, typically between 800 to 1200 degrees Celsius to drive off water and other volatile components from the clay.

Calcination in a directly heated kiln can present several challenges and problems.

If the temperature in the kiln is not properly controlled or monitored, there is a risk of overheating the clay. Excessive heat can lead to overcalcination, where the clay is heated for too long or at too high temperature, causing it to lose its desired properties. Overcalcination can result in a decrease in strength or other undesirable changes.

Directly heated kilns often exhibit lower energy efficiency compared to other types of kilns. Since the heat is directly applied to the clay, there can be significant heat loss through off-gas. This can increase energy consumption and operating costs.

To mitigate these problems, it is essential to carefully monitor and control the temperature of and the residence time in the kiln, ensure proper insulation to minimize heat loss, implement efficient combustion systems, and conduct regular maintenance and inspection of the kiln.

Previously employed kiln processes are associated with a number of disadvantages. These include high energy consumption, high costs and expensive off-gas treatment to meet acceptable emission levels, especially dust emission levels. The presently claimed invention seeks to overcome these shortcomings.

### Summary of the Invention

It is an object of the present invention to provide a means for the treatment of clay or a composition comprising clay which improves dust emission levels and allows for better control of the temperature during the heating stage.

It is a further object of the present invention to provide a process for the treatment of clay which improves the handling and conveying properties of the clay. The objective can be achieved by mixing and/or granulating clay with other materials.

In particular, the invention relates to the production of materials that exhibit hydraulic properties after thermal treatment, which materials improve the CO₂ footprint if used as substitute for cement or clinker.

A specific problem to be addressed by the present invention is the generation of dust when heating fine particle materials in a directly heated rotary kiln.

Another problem to be solved by the present invention are the bad handling and conveying properties of pure clay. Further, it is desired to make obsolete the need for drying the clay before entering the reactor.

A solution to the problem involves the use of a unit for the treatment of clay or a composition comprising clay, wherein the unit comprises:
an indirect-fired rotary multi-zone thermal reactor with at least two different temperature zones,
a pre-treatment duct,
a vapour recovery unit comprising a water-based ejector style scrubber, a water cooling and circulation assembly and a water collection tank.

A further solution to the problem involves a process for the treatment of clay or a composition comprising clay, wherein the process comprises the following steps:
i) Addition of clay or a composition comprising clay as a feed material into an indirect-fired rotary thermal reactor, wherein the indirect-fired rotary thermal reactor is a multi-zone reactor with at least two different temperature zones;
ii) Heating the reactor in each of the temperature zones, wherein:
   a. in a first temperature zone, the temperature is set to 93-149 °C;
   b. in a second temperature zone, the temperature is set to 600-1000°C;
iii) Passing the flue gas from the thermal reactor through a pre-treatment duct, wherein the pre-treatment duct comprises a water spray, and the velocity of the spray is at least 50 m/s,
iv) Passing the exhaust vapour from the pre-treatment duct through a vapour recovery unit comprising a water-based ejector style scrubber, a water cooling and circulation assembly, and a water collection tank wherein condensed liquid from the water-based ejector style scrubber enters the water collection tank.

The present invention is associated with a number of advantageous effects. These include, but are not limited to the following:
1. Providing a unit / process for the treatment of clay or a composition comprising clay on a commercial scale.
2. Improvement in energy efficiency.
3. Efficient and low-cost off-gas treatment system.

In a preferred embodiment the raw clay is mixed and/or granulated with other materials prior to entering the thermal treatment step, where those other materials preferably exhibit hydraulic properties after thermal treatment. The granulation improves the handling and conveying properties of raw clay significantly.

In a preferred embodiment the raw clay or composition comprising clay is mixed and/or granulated with slag or slag sand or blast furnace slag obtained as by-product from steelmaking.

In a preferred embodiment the raw clay is mixed and/or granulated with fly ash obtained as by-product from steel making, power plants or waste incineration plants.

In a preferred embodiment the raw clay is mixed and/or granulated with gypsum obtained as by-product from off-gas purification.

In a preferred embodiment the raw clay is mixed and/or granulated with washed bypass dust from cement manufacturing.

The granulated clay or composition comprising clay is activated by the thermal treatment and can be used as substitute for conventional cement or clinker. Substitution of conventional cement or clinker can be achieved by grinding the material after the thermal treatment step and using this material as a replacement for conventional cement or as admixture together with conventional cement.

As an alternative, substitution of conventional cement or clinker can be achieved by grinding the material obtained after the thermal treatment step jointly with cement clinker in a cement mill.

In a preferred embodiment the thermally treated, granulated mixture comprising clay or a composition comprising clay is put into a cement kiln together with raw mix for cement.

A problem solved by the present invention is the provision of a means for the treatment of clay or a composition comprising clay which improves CO₂ emission levels and allows a better control of the temperature during the heating stage.

### Detailed Description

Embodiments according to the present invention will now be described in more detail.

The objectives of the present invention are achieved by the implementation of an indirect-fired rotary multi-zone thermal reactor for the treatment of clay or a composition comprising clay.

In one embodiment the process according to the present invention involves the use of a unit for the treatment of clay or a composition comprising clay that comprises:
an indirect-fired rotary multi-zone thermal reactor with at least two different temperature zones,
a pre-treatment duct, and
a vapour recovery unit comprising a water-based ejector style scrubber, a water cooling and circulation assembly, and a water collection tank.

In one embodiment, the disassembled unit employed in the process according to the invention can be made mobile as the parts fit into a series of shipping containers. This has the advantage that the unit is easily transported to/from a specific job site.

In an embodiment according to the invention, the unit employed in the process (and/or the process) allows for high-volume continuous feed processing.

The individual components of the unit employed in the process according to the present invention will now be described in more detail, including optional and preferred embodiments. The following description of the embodiments is equally applicable to the process according to the present invention.

### Feed Hopper

In one embodiment, the unit for the treatment of clay or a composition comprising clay comprises a hopper equipped with a live bottom feed.

Utilising a hopper with a live bottom feed has the advantage of avoiding flowback of the material. Furthermore, it allows the unit to operate as a closed process.

In an embodiment according to the invention, the feed rate can reach up to 7.5 metric tonnes per hour. In an embodiment, the feed rate can be varied from 2.5 to 7.5 metric tonnes per hour. Preferably, the feed rate is from 3.0 to 7.5 metric tonnes per hour. More preferably the feed rate is from 3.5 to 7.5 metric tonnes per hour. Even more preferably the feed rate is from 4.0 to 7.5 metric tonnes per hour. Most preferably the feed rate is from 4.5 to 7.5 metric tonnes per hour.

In an embodiment according to the present invention, the feed hopper is attached to an indirect-fired rotary multi-zone thermal reactor.

### Indirect-fired rotary thermal reactor

In indirect-fired rotary thermal reactors, heat is introduced to the outside of a drum containing the material to be treated. The heat source is not particularly limited, but can include an electrical furnace or a source of combustible materials such as natural gas, waste gas or fuel. Preferably the heat source is an electrical furnace. This has the advantage that it improves the mobility of the unit.

Advantages of the reactor being indirect-fired and rotary include avoiding direct contact between the heat source and the material, providing a better control of the temperatures and allowing the internal processing atmosphere to be controlled.

Electricity as a heat source opens up the possibility of using CO₂-free energy for the thermal treatment, thereby resulting in an even better CO₂ footprint of the products.

In a preferred embodiment a significant overcapacity of equipment is installed, and said equipment is operated merely part-time. Thus, consumption of electricity can be shifted to most favourable times.

For example, the electrically heated reactor may be designed with 200% of nameplate (or nominal) capacity and operated for 50% of the time only. This allows balancing supply and demand of electricity in such a way that high consumption of electricity is activated in times of oversupply (sunny and windy periods and low demand of electricity) and low consumption of electricity is established in times of shortage of electricity (dark and windless periods and high demand of electricity).

The advantages of lower cost for electricity generally overcome the higher investment for the higher nameplate capacity.

In a further embodiment, the feed material enters the system at ambient temperature.

In an embodiment, the reactor can be heated up to 1200 °C. Preferably the reactor is heated to temperatures of from 600 °C to 1000 °C. The temperatures are defined as the temperatures of the outside reactor wall in the middle of a temperature zone.

The term temperature zone refers to a section of the reactor in which the energy input can be controlled independently of adjacent sections and wherein the amount of thermal energy supplied per unit surface area of the reactor is kept constant throughout the temperature zone (variation of less than 10%, preferably less than 5%).

It is possible for there to exist sections of the reactor that are not temperature zones, e.g. non-heated sections.

In a preferred embodiment, the total retention time of the material in the temperature zones of the reactor is at least 30 minutes.

In an embodiment according to the invention, the reactor can be adjusted to manage dwell time (retention time) by adjusting the angle and speed. Adjusting the retention time has the advantage that the removal of all volatile compounds from the material is ensured. Furthermore, the ability to adjust the retention time has the advantage that there is a large flexibility in the types of material that can be used and the level of dehydration achieved. For example, if it is only required to remove a certain amount of water, the retention time can be decreased.

In a preferred embodiment, the reactor has a sealed feed assembly.

In a preferred embodiment, the reactor has a sealed discharge assembly.

In a preferred embodiment, the reactor has sealed feed and discharge assemblies.

The indirect-fired rotary thermal reactor is an indirect-fired rotary multi-zone thermal reactor with at least two temperature zones.

The reactor is an indirect-fired rotary multi-zone thermal reactor with at least two temperature zones. Preferably, the temperature(s) in the initial temperature zone(s) is/are set to vaporise free water, and the temperature(s) of the later temperature zone(s) is set to vaporise crystal water. An advantage is that the multi-zone system allows the reactor temperature to increase in a controlled manner along with the material moving through the reactor in a continuous process.

The indirect-fired rotary multi-zone thermal reactor has at least two temperature zones. In the reactor having at least two temperature zones, preferably two zones, optionally three zones, the temperature in temperature zone 1 is set to 93-149 °C, preferably 93-110 °C, the temperature in temperature zone 2 is set to 600-1000 °C, preferably 750-950 °C, and optionally, the temperature in temperature zone 3 ranges up to 1200 °C.

Heating the material in two, optionally three, different temperature zones, each with the aforementioned temperature ranges, ensures more efficient processing. The temperature zones are arranged so as to continually increase the temperature of the material passing through the reactor, i.e. from lowest to highest temperature.

In a preferred embodiment, the material is heated by the shell and lifters configured along the internal walls of the reactor to ensure the most efficient heat transfer.

In an embodiment, the reactor is preferably equipped with a collection unit for the treated clay or composition comprising clay. Equally, in a preferred embodiment, the treated clay or composition comprising clay has a water content of less than 2.0%, 1.8%, 1.6%, 1.4%, 1.2% or 1.0% based on the total mass of the treated clay or composition comprising clay.

In another preferred embodiment, the processed material discharges into a container through a double airlock.

In a preferred embodiment, the processed material discharges into a cooling screw through a double airlock.

In an embodiment, the material is discharged into a cooling screw and stockpiled.

In an embodiment, the flue gas exiting the reactor, is not processed by a thermal oxidiser before entering a scrubber unit.

In the present invention, the flue gas exiting the reactor enters a pre-treatment duct.

### Pre-treatment duct

Vapour from the heated clay or composition comprising clay from the reactor enters a pre-treatment duct, followed by a vapour recovery unit.

The vapour recovery unit comprises a water condensing unit consisting of a water-based ejector style scrubber, a water cooling and circulation assembly, and a water tank.

In a preferred embodiment, the water condensing unit removes at least 80% of water contained in the flue gas. Preferably the water condensing unit removes from 80% to 100%, more preferably from 85% to 99%, even more preferably 90% to 99%, even more preferably 90% to 97%, and most preferably from 90% to 95% of water from the flue gas.

Condensed liquid from the water-based ejector style scrubber enters the water collection tank. In an embodiment, the tank is a recirculating tank.

According to an embodiment of the invention, the condensed liquid from the ejector style scrubber enters a solid-liquid separator.

In an embodiment, the separated water is recirculated. This can be achieved with the water cooling and circulation assembly. In a further embodiment, the separated water is held in a collection tank and then recirculated. These embodiments have the advantage that the water can be captured from the flue gas and can subsequently be used as a scrubber liquid to capture more water from the flue gas entering the scrubber.

The term water as it has been mentioned above includes water comprising some acidic or alkaline compounds for capturing alkaline (e.g. NH₃) or acidic (e.g. SO₂) compounds generated from the heat treatment in the kiln.

### Optional further scrubbers

In a further embodiment, the invention optionally comprises one or more additional scrubbers. The further optional scrubbers can be arranged in any order.

In a preferred embodiment, one or more of the additional scrubbers are optionally equipped with a recirculating tank.

The unit employed in the process according to the present invention can be used in a process for the treatment of clay or a composition comprising clay. The following embodiments further describe a process according to the present invention for the treatment of clay or a composition comprising clay.

In the following, further embodiments and preferred embodiments of the process according to the present invention are described.

In an embodiment according to the present invention, a process for the treatment of clay or a composition comprising clay comprises the steps of:
i) Addition of clay or a composition comprising clay as a feed material into an indirect-fired rotary thermal reactor, wherein the indirect-fired rotary thermal reactor is a multi-zone reactor with at least two different temperature zones;
ii) Heating the reactor in each of the temperature zones, wherein:
   a. in a first temperature zone, the temperature is set to 93-149 °C;
   b. in a second temperature zone, the temperature is set to 600-1000 °C;
iii) Passing the flue gas from the thermal reactor through a pre-treatment duct, wherein the pre-treatment duct comprises a water spray, and the velocity of the spray is at least 50 m/s;
iv) Passing the exhaust vapour from the pre-treatment duct through a vapour recovery unit comprising a water-based ejector style scrubber, a water cooling and circulation assembly, and a water collection tank; wherein condensed liquid from the water-based ejector style scrubber enters the water collection tank.

In a preferred embodiment, the total material retention time in the temperature zones is at least 30 min.

In a preferred embodiment, the total material retention time in the reactor is at least 45 min.

In a preferred embodiment, the reactor can process material at up to 1000 °C.

In a preferred embodiment, the reactor has a sealed discharge assembly.

In a preferred embodiment, the reactor has a sealed feed assembly.

In a preferred embodiment, exhaust gas exiting the scrubber of the vapour recovery unit passes through one or more further scrubbers.

In a preferred embodiment, the vapour recovery unit removes at least 80% of water contained in the flue gas.

In a preferred embodiment the exhaust gas exiting the vapour recovery unit contains less than 100 ppm of water.

The purification of the exhaust gas *via* a system including scrubbers provides a more environmentally friendly treatment of clay or a composition comprising clay.

## Claims

1. Process for the treatment of clay or a composition comprising clay, wherein the process comprises the steps of:
i) Addition of clay or a composition comprising clay as a feed material into an indirect-fired rotary thermal reactor, wherein the indirect-fired rotary thermal reactor is a multi-zone reactor with at least two different temperature zones;
ii) Heating the reactor in each of the temperature zones, wherein:
a. in a first temperature zone, the temperature is set to 93-149 °C;
b. in a second temperature zone, the temperature is set to 600-1000 °C;
iii) Passing the flue gas from the thermal reactor through a pre-treatment duct, wherein the pre-treatment duct comprises a water spray, and the velocity of the spray is at least 50 m/s;
iv) Passing the exhaust vapour from the pre-treatment duct through a vapour recovery unit comprising a water-based ejector style scrubber, a water cooling and circulation assembly, and a water collection tank; wherein condensed liquid from the water-based ejector style scrubber enters the water collection tank.

2. Process according to claim 1, wherein the process provides a treated product with a water content less than 2%, preferably less than 1% based on the total mass of the treated clay or composition comprising clay.

3. Process according to any preceding claim, wherein the indirect-fired rotary thermal reactor has two temperature zones.

4. Process according to any preceding claim, wherein the indirect-fired rotary thermal reactor has three temperature zones, wherein, in the third temperature zone, the temperature ranges up to 1200 °C.

5. Process according to any preceding claim, wherein the total material retention time in the temperature zones is at least 30 min.

6. Process according to any preceding claim, wherein the total material retention time in the reactor is at least 45 min.

7. Process according to any preceding claim, wherein a high temperature Inconel^{®} alloy is the material of construction of the rotary thermal reactor.

8. Process according to any preceding claim, wherein the rotary thermal reactor has a sealed discharge assembly and/or a sealed feed assembly.

9. Process according to any preceding claim, wherein the clay is pre-dried and ground prior to entering the indirect-fired rotary thermal reactor.

10. Process according to any preceding claim, wherein the clay is mixed and/or granulated with other materials prior to entering the indirect-fired rotary thermal reactor, preferably materials that exhibit hydraulic properties after thermal treatment.

11. Process according to any preceding claim, wherein the clay, prior to entering the indirect-fired rotary thermal reactor, is mixed and/or granulated with slag or slag sand or blast furnace slag obtained as by-product from steelmaking, preferably slag or slag sand obtained as by-product from steelmaking.

12. Process according to any preceding claim, wherein the clay, prior to entering the indirect-fired rotary thermal reactor, is mixed and/or granulated with fly ash obtained as by-product from steel making, power plants or waste incineration plants.

13. Process according to any preceding claim, wherein the clay, prior to entering the indirect-fired rotary thermal reactor, is mixed and/or granulated with gypsum obtained as by-product from off-gas purification.

14. Process according to any preceding claim, wherein the clay, prior to entering the indirect-fired rotary thermal reactor, is mixed and/or granulated with washed bypass dust from cement manufacturing.

15. Process according to any preceding claim, wherein the clay, prior to entering the indirect-fired rotary thermal reactor, is mixed and/or granulated with the fine fraction obtained from recycling and decomposition of concrete.
